# EUROPÄISCHE PATENTANMELDUNG

(11) **EP 2 395 046 A1**
(43) Veröffentlichungstag der Anmeldung: **14.12.2011**
(21) Anmeldenummer: 10162127.4
(22) Anmeldetag: 06.05.2010
(51) Int. Cl.: C08J 11/16, C08J 11/28, C08L 95/00

(54) **Neues Verfahren zur Herstellung von gummimodifiziertem Bitumen aus vulkanisiertem Gummi**

(71) Anmelder: Rhein Chemie Rheinau GmbH, 68219 Mannheim (DE)
(72) Erfinder: Säwe, Martin, 69488 Birkenau (DE); Klein, Thomas, 69126 Heidelberg (DE); Larem, David, 64859 Eppertshausen (DE); Mücke, Michael, 68647 Biblis (DE); Pareigis, Erwin, 69488 Birkenau (DE)
(74) Vertreter: Siegers, Britta

(57) **Zusammenfassung**

Gegenstand der vorliegenden Erfindung ist ein neuartiges Verfahren zur Herstellung von gummimodifiziertem Bitumen aus vulkanisiertem Gummi.

## Beschreibung

Gegenstand der vorliegenden Erfindung ist ein neuartiges Verfahren zur Herstellung von gummimodifiziertem Bitumen aus vulkanisiertem Gummi.

Gummimodifiziertes Bitumen, sog. veredeltes Bitumen, weist gegenüber unmodifiziertem Bitumen den Vorteil der mit der Temperatur weitgehend konstanten viskoelastischen Eigenschaften bei Variation der Temperatur auf: So ist es in großer Hitze nicht so weich und bei tiefen Temperaturen nicht so brüchig und verfügt auch über eine erhöhte Lebensdauer.

In diesem Sinne modifiziertes Bitumen kann dabei durch Zumischen eines unvernetzten Polymers oder eines vernetzten Gummis hergestellt werden. Die Zugabe von unvemetztem Polymer erfordert eine anschließende Vernetzung mit Schwefel oder Polysulfiden, siehe US-A 4 554 313. Dieser Weg ist schon alleine durch die eingesetzten Materialien sehr teuer.

Aufgrund der hohen Kosten für die Polymere hat man sich in der Vergangenheit der in großer Menge anfallenden Gummireifen als Quelle für einen Ersatzstoff bedient.

Allerdings ist schwefel-vulkanisiertes (vernetztes) Gummi in Bitumen relativ unlöslich, so dass dessen Wiederverwertung in Spezialbitumen problematisch ist (Shell Bitumen Handbook, Shell UK, 2003 ISBN 0 7277 3220 X, Seite 79). Bitumen wird heiß gelagert bzw. transportiert, wobei die Homogenität gewahrt bleiben muss. Eingemischte, schlecht lösliche oder schlecht dispergierbare Polymere oder auch vulkanisiertes Gummi setzen sich in der heiß gelagerten Mischung nach unten (im Fall von Gummi) oder oben (im Fall von Polymeren) ab. Die anwendungstechnischen Eigenschaften von modifiziertem Bitumen aus unterschiedlichen Lagerzonen unterscheiden sich, so dass sich Qualitätsprobleme beim Straßenbau ergeben. So beschreibt die DE-A 3885974 Probleme der Stabilität von Bitumen-Gummimehlmischungen ab einer Lagerdauer von 6 Stunden bei 200°C, die sich in einem Abfall der Viskosität bemerkbar machen. Als Lösung des Problems wird der Zusatz von Schwerölen mit naphthenoaromatischen Charakter sowie eines synthetischen Elastomers mit ungesättigten Olefinen mit Molekulargewichten über 100000 d vorgeschlagen. Die Mengen des zusätzlich notwendigen Polymers von 2-3 % lassen allerdings den ökonomischen Vorteil des Ersatzes eines Polymers durch Gummirezyklat verschwinden. US 3 338 849 beschreibt den Einsatz von Polyethylen in Verbindung mit Gilsonit, einem natürlichen Bitumenmineral, als Dispergiermittel für Bitumenrezyklat. Auch diese Lösung erweist sich als nicht rentabel.

Um die Löslichkeit bzw. Dispergierbarkeit von vernetztem Gummi bzw. Kautschuk zu verbessern wurden weitere Verfahren entwickelt unter Einsatz von hoher Temperatur, hohem Druck in Verbindung mit Dampf und/oder mechanischer Energie (z. B. im Doppelschneckenextruder; US-A 6,335,377) oder auch mittels Bestrahlung mit Mikrowellen, US-A 4104205). Diese Verfahren waren aber weder hinreichend effektiv noch wirtschaftlich; außerdem waren sie hinsichtlich des Schwefelbrückenabbaus nicht selektiv. So wurde auch die Polymerkette zerstört und damit die mit dem Einsatz von Polymeren verbundenen Vorteile reduziert.

Es stellte sich daher die Aufgabe, ein kostengünstiges, technisch einwandfreies und anwendungsfreundliches Verfahren zu finden, welches die Einarbeitung von vulkanisiertem Gummi, vorzugsweise Altgummi, in Bitumen erleichtert.

Es wurde nun ein Verfahren gefunden, das die Nachteile des Standes der Technik nicht aufweist. Bei diesem Verfahren werden durch die Zugabe bestimmter Schwefelverbindungen selektiv die Schwefelbrücken aufgebrochen, was auf eine kostengünstige Art zu einer verbesserten Löslichkeit des Gummis im Bitumen und somit zu einer besseren Homogenisierung führt. Das auf diese Art hergestellte Bitumen weist damit ein verbessertes Heißlagerverhalten gegenüber dem Einsatz von unbehandeltem Gummirezyklat auf.

Gegenstand der vorliegenden Erfindung ist daher ein neuartiges Verfahren zur Herstellung von gummimodifiziertem Bitumen aus vulkanisiertem Gummi, dadurch gekennzeichnet, dass die Sulfidbrücken des vulkanisierten Gummis mit mindestens einem Dialkylpolysulfid aufgebrochen (devulkanisiert) werden und es anschließend dem Bitumen zugemischt wird.

Die Effektivität des erfindungsgemäßen Verfahrens ist um so überraschender, als die ebenfalls mögliche vernetzende (vulkanisierende) Wirkung der Dialkylpolysulfide im Bitumen nicht in Erscheinung tritt.

Bei den in dem erfindungsgemäßen Verfahren eingesetzten Dialkylpolysulfiden handelt es sich um Verbindungen der allgemeinen Formel (1),

R¹—Sₓ—R² (1),

worin
R¹ und R² gleich oder verschieden sind und für einen linearen oder verzweigten C₁-C₁₈-Alkylrest stehen und x für die Zahlen 3 bis 8 steht.

Darüber hinaus ist es weiter bevorzugt, wenn als Dialkylpolysulfide solche eingesetzt werden, in denen R¹ und R² in der allgemeinen Formel für lineare oder verzweigte C₅- bis C₁₅-Alkylreste stehen.

Ebenfalls bevorzugt ist, wenn als Dialkylpolysulfide solche eingesetzt werden, in denen x in der allgemeinen Formel (1) für die Zahlen 3 bis 5 steht und R¹ bis R³ in der allgemeinen Formel für lineare oder verzweigte C₅- bis C₁₅₋ Alkylreste stehen.

Als Dialkylpolysulfid bevorzugt sind Dioctylpentasulfid und/oder Dioctyltetrasulfid, besonders bevorzugt verzweigte Dioctylpentasulfide oder Dioctyltetrasulfide.

Bei den vorgenannten Dialkylpolysulfiden handelt es sich um kommerziell verfügbare Produkte, so z.B. Additin® RC 2540, welches bei der Rhein Chemie Rheinau GmbH erhältlich ist.

Die Dialkylpolysulfide können sowohl einzeln als auch in beliebiger Abmischung untereinander in dem erfindungsgemäßen Verfahren eingesetzt werden.

Üblicherweise werden die Dialkylpolysulfide in Mengen von 1 bis 30 Gew.%, besonders bevorzugt 3 bis 25 Gew.%, insbesondere von 5 bis 20 Gew.%, jeweils bezogen auf das zu devulkanisierenden Gummivulkanisat eingesetzt.

In dem erfindungsgemäßen Verfahren erfolgt das Aufbrechen der Sulfidbrücken und/oder das Zumischen zum Bitumen unter mechanischer Beanspruchung. Vorzugsweise erfolgt das Aufbrechen der Sulfidbrücken unter mechanischer Beanspruchung.

Mechanische Beanspruchung im Sinne der Erfindung bedeutet den Einsatz von Mischaggregaten, wie z.B. Extruder, Innenmischer, Hochdruckhomogenisatoren, wie z.B. Hochschermischgeräte, wie z. B. Ultra-Turrax®, Kneter und/oder Walzwerk. Im großtechnischen Bereich ist die Verwendung von Extrudern und/oder Innenmischern dabei besonders bevorzugt, wobei die Art des Extruders und/oder Innenmischers keiner besonderen Beschränkung unterliegt. Im Labormaßstab ist das Hochschermischgerät, z. B. ein Ultra-Turrax®, besonders bevorzugt.

Exemplarisch genannt sind nachfolgend Doppelschneckenextruder oder Planetwalzenextruder.

Bei der Durchführung im Extruder erfolgt dies vorzugsweise bei einer hohen Scherung.

Das vulkanisierte Gummi wird vorzugsweise in Form von rieselfähigen Teilchen kalt eindosiert und danach gegebenenfalls erwärmt. Das Eindosieren der Teilchen der Gummivulkanisate erfolgt vorzugsweise am Beginn der Verfahrenslänge des Extruders und im Anschluß daran die Zudosierung des Polysulfids.

In einer weiteren Ausführungsform des erfindungsgemäßen Verfahrens wird das Polysulfid vor der Zugabe mit Öl, beispielsweise mineralischem Öl, wie z.B. naphthenischem Öl, versetzt.

Im Fall des Einsatzes eines Innenmischers zur mechanischen Beanspruchung sind beispielsweise Innenmischer mit ineinander greifenden oder mit tangierenden Rotoren geeignet. Dabei ist ein Innenmischer mit ineinander greifenden Rotoren besonders bevorzugt, da auf diese Weise mehr Scherenergie in die einzelnen Teilchen des Gummivulkanisats eingebracht werden kann.

Auch bei der Durchführung im Innenmischer kann in einer weiteren Ausführungsform des erfindungsgemäßen Verfahrens das Polysulfid vor der Zugabe mit Öl, beispielsweise mineralischem Öl, wie z.B. naphthenischem Öl, versetzt werden.

In einer weiteren Ausführungsform des erfindungsgemäßen Verfahrens erfolgt das Zumischen des auf die zuvor beschriebene Art devulkanisierten Gummis in den Bitumen bei Temperaturen von 60 bis 200°C.

Die Durchführung der Regeneration kann sowohl bei Normaldruck als auch bei erhöhtem Druck durchgeführt werden. Ein bevorzugter Regenerationsdruck liegt zwischen 1 und 20 bar, ein besonders bevorzugter Regenerationsdruck liegt zwischen 1 und 10 bar und ein ganz besonders bevorzugter Regenerationsdruck liegt zwischen 1 und 3 bar.

Um unerwünschte Nebenreaktionen während der Regenerierung, insbesondere bei erhöhten Temperaturen, zu vermeiden, wird das erfindungsgemäße Verfahren vorzugsweise unter Ausschluss von Sauerstoff durchgeführt.

In einer weiteren Ausführungsform des erfindungsgemäßen Verfahrens werden weitere Additive, wie Metallverbindungen/-salze, insbesondere organische Zinkverbindungen/- salze u.a. als Sulfidfänger und damit Geruchsverminderer, wie sie die Rhein Chemie Rheinau GmbH unter den Namen Additin® RC 4530 und Additin® RC 4580 anbietet, zudosiert

Die Menge an zusätzlichen Additiven beträgt vorzugsweise 0,1 bis 1 Gew%.

Bei dem vulkanisiertem Gummi handelt es sich um vernetzte Kautschuke auf Basis von Polydienen der R-Gruppe, umfassend Naturkautschuke (NR), Butadien-Kautschuke (BR), Styrol-Butadien-Kautschuke (SBR), Acrylnitril-Butadien-Kautschuke (NBR) und Butylkautschuke (IIR), um Vulanisate aus Kautschuken mit wenigen Doppelbindungen oder doppelbindungsfreien Polymerhauptketten aus der M-Gruppe, umfassend Ethylen-Propylen-Dien-Kautschuk (EPDM), und Mischungen aus den vorgenannten Kautschuken der R- und M-Gruppe.

Die nach dem erfindungsgemäßen Verfahren hergestellten gummimodifizierten Bitumina finden Anwendung im Hochbau zur Abdichtung von Gebäudeteilen gegen Wasser (Bitumendachbahnen zur Dachabdichtung), Schutz von Stahl gegen Korrosion und im Straßenbau als Bindemittel für die Gesteinskörnungen im Asphalt (Straßenbelag).

Die vorliegende Erfindung wird anhand der nachfolgenden Beispiele näher erläutert, wobei die vorliegende Erfindung keinesfalls auf die Beispiele beschränkt ist.

### Ausführungsbeispiele:

Die Güte des gummimodifizierten Bitumens wird u.a. über das Heiß-Lagerverhalten bestimmt. Die dazu gehörige Bestimmungsmethode ist ATSM D 7173-05 (Standard Practice for Determining the Separation Tendency of Polymer from Polymer Modified Asphalt) bzw. die DIN EN 13399; die einzuhaltende Normen sind die die DIN EN 14023 (Polymermodifiziertes Bitumen) und die TL Bitumen StB 07.

### Beispiel 1 (nicht errindungsgemäß):

Es wurde ein gummimodifiziertes Bitumen (PMB) hergestellt, wobei zunächst ein Bitumen mit einer Nadelpenetration von 50/70 (DIN EN 1426) erhältlich bei Shell AG bei > 100°C verflüssigt wurde. Danach wurden 2 Mischungen aus 475 g Bitumen 50/70 und 25 g **Kraton** D 1102 Polymer (ein SBS, ein Styrol-Butadien-Styrol-Thermoplastisches Elastomer der Firma Kraton Polymers U.S. LLC) jeweils in einem Aluminium-Behälter bei ca. 130 °C für 15 bis 30 min mit einem Hochschermischgerät, z. B. Marke Ultra-Turrax® hergestellt.

Die Vernetzung des PMB erfolgte mit 1% Schwefel und 0,4% ZnCO₃ unter Zugabe bei 165°C.

Die Probe 1b mit dem Dioctylpentasulfid (Additin ® RC2540 von der Rhein Chemie Rheinau GmbH) und Zinkcarbonat enthielt schon bei hoher Temperatur eine viskose Gelphase in einer flüssigeren Solphase, die sich beim Abkühlen als Inhomogenität bemerkbar machte. Die Probe 1a mit elementarem Schwefel und Zinkcarbonat war homogener bei höherer Temperatur.

Beim Test nach DIN EN 13399 (Stabilität gegen Entmischung nach Heisslagerung; Differenz der Erweichungspunkte Ring und Kugel) waren wie folgt:

| | Vernetzung | Differenz der Erweichungspunkte Ring und Kugel DIN EN 13399 in K |
|---|---|---|
| Probe 1a: | PMB+elementarer Schwefel (1%)+ ZnCO₃ (0,4%) | 13 |
| Probe 1b: | PMB + Dioctylpentasulfid (Schwefel-Gehalt=1%)+ ZnCO₃ (0,4%) | 21,2 |

Wie ersichtlich wirkt sich hier das Dialkylpolysulfid so aus, dass es die Lagerstabilität gemäss DIN EN 13399 der Mischung verschlechtert.

### Beispiel 2

Es wurde Gummi-modifiziertes Bitumen hergestellt, wobei gemahlenes Altgummi Verwendung fand.

### Schritt 1: Devulkanisierung von Gummimehl (aus Altgummi):

Zur Devulkanisierung des Gummis wurden Abmischungen von verzweigtem Dioctylpentasulfid in naphthenischen Öl (Typ Nynas T 22) hergestellt.

35 g eines 40%igen verzweigten Dioctylpentasulfids in Nynas T 22 wurden in 200g Gummimehl mit einem Mischaggregat eingerührt, nach 12 h Einwirkungszeit im Ölbad bei 150°C 4 h unter Mischen getempert (Probe 2 A).

Als Vergleichsversuch wurde unbehandeltes Gummi verwendet (Probe 2 B)

### Schritt 2: Herstellung des Gummi-modifizierten Bitumens:

Eingesetzt wurde Bitumen des o.g. Typs 50/70 der Firma Shell AG.

Die Proben 2A und 2B werden zu 10 Gew% in Bitumen 50/70 zugemischt und danach hinsichtlich des Heisslagerverhaltens nach DIN 13399 vermessen.

| Gummimischung | Differenz der Erweichungspunkte Ring und Kugel DIN EN 13399 in K |
|---|---|
| Probe 2B (Vergleich) | 7,4 |
| Probe 2A (erfindungsgemäß) | 4 |

Die nach dem erfindungsgemäßen Verfahren hergestellte Probe 2A zeigt die Verbesserung des Lagerverhaltens, gemessen in der Differenz des Erweichungspunkt. Der Wert unter 5K bedeutet, dass es innerhalb der TL Bitumen StB bzw. DIN EN 14023 liegt. Durch das erfindungsgemäße Verfahren gelingt die Herstellung von gummimodifiziertem Bitumen unter Einsatz von wiederverwertetem vulkanisiertem Gummi auf eine kostengünstige und effektive Weise.

### Beispiel 3 (Vergleichsbeispiel):

35 g eines 40%igen verzweigten Dioctylpentasulfids in Nynas T 22 wurden auf 200g Gummimehl aufgesprüht und nach 12 h Einwirkungszeit im Ölbad bei 150°C 4 h ohne Mischen getempert (Probe 3). Die vorgenannte Probe 3 wurde zu 10 Gew% in Bitumen 50/70 zugemischt und danach hinsichtlich des Heisslagerverhaltens nach DIN 13399 vermessen.

| Gummimischung | Differenz der Erweichungspunkte Ring und Kugel DIN EN 13399 in K |
|---|---|
| Probe 3 (Vergleich) | 9 |

Damit zeigt sich, dass ohne die in dem erfindungsgemäßen Verfahren beanspruchte mechanische Beanspruchung nicht die in der TL Bitumen geforderten Grenzwerte erreicht werden können.

## Patentansprüche

1. Verfahren zur Herstellung von gummimodifiziertem Bitumen aus vulkanisiertem Gummi, **dadurch gekennzeichnet, dass** dessen Sulfidbrücken mit mindestens einem Dialkylpolysulfid aufgebrochen (devulkanisiert) werden und es anschließend dem Bitumen zugemischt wird.

2. Verfahren zur Herstellung von gummimodifiziertem Bitumen aus vulkanisiertem Gummi nach Anspruch 1, **dadurch gekennzeichnet, dass** das Aufbrechen der Sulfidbrücken und/oder das Zumischen zum Bitumen unter mechanischer Beanspruchung erfolgt.

3. Verfahren zur Herstellung von gummimodifiziertem Bitumen aus vulkanisiertem Gummi nach Anspruch 1 oder 2, **dadurch gekennzeichnet, dass** das Zumischen des devulkanisierten Gummis in den Bitumen bei Temperaturen von 60 bis 200°C erfolgt.

4. Verfahren zur Herstellung von gummimodifiziertem Bitumen aus vulkanisiertem Gummi nach einem oder mehreren der Ansprüche 1 oder 3, **dadurch gekennzeichnet, dass** als Dialkylpolysulfid Verbindungen der allgemeinen Formel (1)
R¹—Sₓ—R² (1),
eingesetzt werden,
worin
R¹ und R² gleich oder verschieden sind und für einen linearen oder verzweigten C₁-C₁₈-Alkylrest stehen und x für die Zahlen 2 bis 12 steht.

5. Verfahren nach einem der Ansprüche 1 bis 4, **dadurch gekennzeichnet, dass** man als Dialkylpolysulfid verzweigtes Dioctylpentasulfid oder Dioctyltetrasulfid einsetzt.

## Geänderte Patentansprüche

### Geänderte Patentansprüche gemäss Regel 137(2) EPÜ.

**1.** Verfahren zur Herstellung von gummimodifiziertem Bitumen aus vulkanisiertem Gummi, **dadurch gekennzeichnet, dass** dessen Sulfidbrücken mit mindestens einem Dialkylpolysulfid der allgemeinen Formel (1)
R¹-Sₓ-R² (1),
worin
R¹ und R² gleich oder verschieden sind und für einen linearen oder verzweigten C₁-C₁₈-Alkylrest stehen und x für die Zahlen 3 bis 12 steht,
aufgebrochen (devulkanisiert) werden und es anschließend dem Bitumen zugemischt wird.

**2.** Verfahren zur Herstellung von gummimodifiziertem Bitumen aus vulkanisiertem Gummi nach Anspruch 1, **dadurch gekennzeichnet, dass** das Aufbrechen der Sulfidbrücken und/oder das Zumischen zum Bitumen unter mechanischer Beanspruchung erfolgt.

**3.** Verfahren zur Herstellung von gummimodifiziertem Bitumen aus vulkanisiertem Gummi nach Anspruch 1 oder 2, **dadurch gekennzeichnet, dass** das Zumischen des devulkanisierten Gummis in den Bitumen bei Temperaturen von 60 bis 200°C erfolgt.

**4.** Verfahren nach einem der Ansprüche 1 bis 3, **dadurch gekennzeichnet, dass** man als Dialkylpolysulfid verzweigtes Dioctylpentasulfid oder Dioctyltetrasulfid einsetzt.

**5.** Gummimodifiziertes Bitumen, erhältlich durch Einmischen von vulkanisiertem Gummi, dessen Sulfidbrücken mit mindestens einem Dialkylpolysulfid der allgemeinen Formel (1)
R¹-Sₓ-R² (1),
worin
R¹ und R² gleich oder verschieden sind und für einen linearen oder verzweigten C₁-C₁₈-Alkylrest stehen und x für die Zahlen 3 bis 12 steht, aufgebrochen (devulkanisiert) werden und es anschließend dem Bitumen zugemischt wird.
